# EUROPEAN PATENT APPLICATION

(11) **EP 2 372 633 A1**
(43) Date of publication of application: **05.10.2011**
(21) Application number: 11160107.6
(22) Date of filing: 29.03.2011
(51) Int. Cl.: G06Q 30/00

(54) **Method, portable terminal, server, and system for providing a manual of a portable terminal**

(30) Priority: 29.03.2010 KR 20100028168
(71) Applicant: Samsung Electronics Co., Ltd., Gyeonggi-do (KR)
(72) Inventor: Kim, Hyo-Jeong, Suwon-si, Gyeonggi-do (KR); Ryu, Young-Min, Suwon-si, Gyeonggi-do (KR); Kim, Jong-Hwa, Suwon-si, Gyeonggi-do (KR)
(74) Representative: van Westenbrugge, Andries

(57) **Abstract**

A method for providing a manual of a portable terminal is provided, the method comprising: counting, by each portable terminal, the number of times a manual is requested for each application, storing the count number as count information, and transmitting the stored count information to a server; analyzing, by the server, the count information received from each portable terminal, and listing a manual of an application which is requested at least a predetermined number of times; and transmitting, by the server, the listed manual to each portable terminal.

## Description

### BACKGROUND OF THE INVENTION

### 1. Field of the Invention:

The present invention relates to a portable terminal. More particularly, the present invention relates to a method for providing a manual of a portable terminal. The invention also relates to a server and a system for providing a manual.

### 2. Description of the Related Art:

A portable terminal refers to an electronic device which performs communication and exchanges data while on the move. With the diversification and development of a mobile communication environment, the application range of a portable terminal is now expanding to various fields, including Audio On Demand (AOD) and Video On Demand (VOD) services, video communication in real time using a camera provided in the portable terminal, games, and Digital Multimedia Broadcasting (DMB).

The current portable terminal has evolved into an apparatus capable of using information in various formats as well as providing voice communication. As users have demanded smart phones more and more as portable terminals, functions and types of applications implemented in the portable terminals are rapidly increasing.

To make good use of the portable terminal or a function or application provided in the portable terminal, it is advantageous to have thorough knowledge of a manual of the portable terminal and a manual of a function or application provided in the portable terminal. Typically, a manual of the portable terminal is provided in the form of a printed booklet or in the form of a separate menu to allow the user to check a manual, e.g., a help item. However, as the number of functions and types of applications implemented in the portable terminal increases, it would be cumbersome for the user to search for and check a manual of a corresponding function or application.

### SUMMARY OF THE INVENTION

An aspect of the present invention is to address at least the above-mentioned problems and/or disadvantages and to provide at least the advantages described below. Accordingly, an aspect of the present invention is to provide a method for allowing a user to easily recognize a manual of a portable terminal including a manual of an application.

In accordance with an aspect of the present invention, a method for providing a manual of a portable terminal is provided. The method includes requesting a manual of the portable terminal and outputting the manual in the form of a moving image at the request for the manual.

In accordance with another aspect of the present invention, a method for providing a manual of a portable terminal is provided. The method includes counting, by each portable terminal, the number of times a manual is requested for each application, storing the count number as count information, and transmitting the stored count information to a server, analyzing, by the server, the count information received from each portable terminal, and listing a manual of an application which is requested at least a predetermined number of times, and transmitting, by the server, the listed manual to each portable terminal.

In accordance with another aspect of the present invention, a method of providing a manual is provided. The method includes receiving, from a plurality of portable terminals, a number of times each of a plurality of manuals was requested by users, for each of the plurality of manuals, determining whether the manual was requested at least a predetermined number of times, and transmitting, to each of the portable terminals, manuals corresponding to manuals requested at least the predetermined number of times.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following detailed description taken in conjunction with the accompanying drawings, in which:

FIG. 1 is a block diagram of a portable terminal according to an exemplary embodiment of the present invention;

FIG. 2 is a flowchart illustrating a process of providing a manual of a portable terminal according to an exemplary embodiment of the present invention;

FIGs. 3A and 3B are exemplary diagrams for describing a process of providing a manual of a portable terminal according to an exemplary embodiment of the present invention;

FIGs. 4A and 4B are exemplary diagrams for describing a process of providing a manual of a portable terminal according to an exemplary embodiment of the present invention;

FIG. 5 is a flowchart illustrating a process of providing a manual of a portable terminal according to an exemplary embodiment of the present invention; and

FIG. 6 is an exemplary diagram for describing a process of providing a manual of a portable terminal according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding, but these are to be regarded as merely exemplary. Accordingly, those of ordinary skill in the art will recognize that various changes and modifications of the embodiments described herein can be made without departing from the scope as claimed by the annexed claims. In addition, descriptions of well-known functions and constructions may be omitted for clarity and conciseness.

The terms and words used in the following description and claims are not limited to the bibliographical meanings, but are merely used by the inventor to enable a clear and consistent understanding of the invention. Accordingly, it should be apparent to those skilled in the art that the following description of exemplary embodiments of the present invention is provided for illustration purposes only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

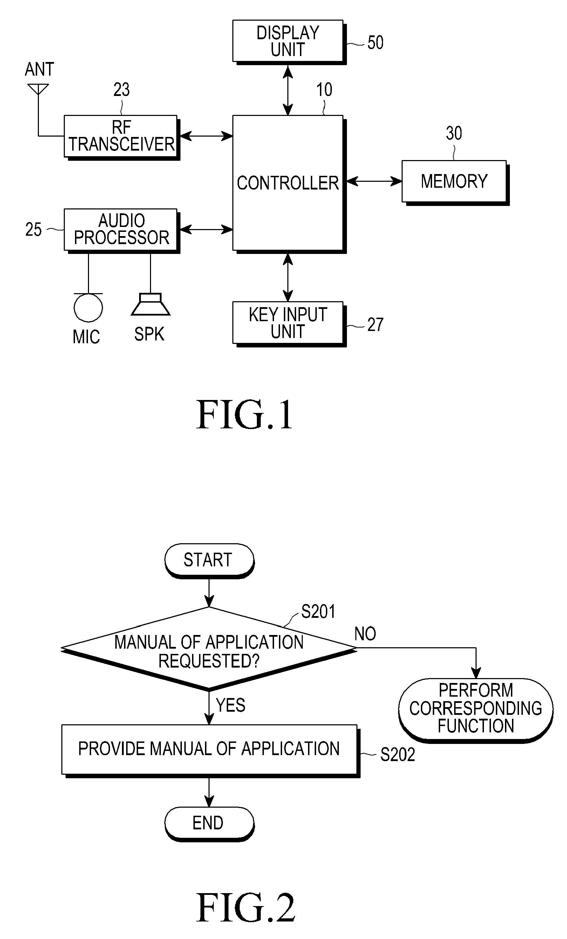

FIG. 1 is a block diagram of a portable terminal according to an exemplary embodiment of the present invention. Figure 1 shows a controller 10 connected to a key input unit 27, a Radio Frequency transceiver 23, an audio processor 25, a memory 30, and a display unit 50.

Referring to FIG. 1, the key input unit 27 includes keys for numbers and character information and functional keys for setting various functions.

The Radio Frequency (RF) transceiver 23 is connected to an antenna (ANT), is arranged for performing a wireless communication function of the portable terminal and includes an RF unit and a modem (not shown). The RF unit includes an RF transmitter for up-converting a frequency of a transmission signal and amplifying the up-converted transmission signal and an RF receiver for low-noise-amplifying a received signal and down-converting a frequency of the low-noise-amplified signal. The modem includes a transmitter for encoding and modulating the transmission signal and a receiver for demodulating and decoding the received signal.

The audio processor 25 may comprise a codec including a data codec and an audio codec. The data codec processes packet data and the audio codec processes audio signals such as voice and multimedia files. The audio processor 25 also converts a digital audio signal received from the modem into an analog audio signal through the audio codec and reproduces the analog audio signal via a speaker (SPK), or converts an analog audio signal generated from a microphone (MIC) into a digital audio signal through the audio codec and transmits the digital audio signal to the modem. The codec may be separately provided or may be included in a controller 10 of the portable terminal.

The memory 30 includes a Read Only Memory (ROM) and a Random Access Memory (RAM). The memory 30 may include program memories and data memories and store programs for controlling an operation of the portable terminal and data for booting. The memory 30 may be an external memory such as Compact Flash (CF), Secure Digital (SD), Micro SD, Mini SD, Extreme Digital (xD), and a memory stick. The memory 30 stores an application which provides various functions executed in the portable terminal. The application may be provided at the release of the portable terminal or may be downloaded by the user.

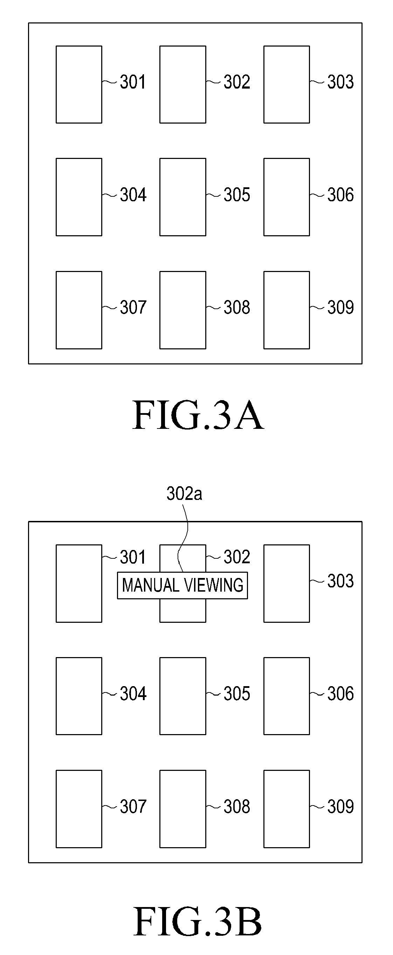

Referring to FIG. 3A, icons 301 through 309 correspond to applications executed in the portable terminal according to an exemplary embodiment of the present invention. The user may execute a desired application by selecting any one of the icons 301 through 309 shown in FIG. 3A. The memory 30 may store a manual of each application which shows a screen provided for each operation step of execution of the application and a user key input (i.e., a key input through the key input unit 27 or a touch input through the display unit 50) for using the application, thereby allowing the user to easily use the application.

The display unit 50 displays an image signal and user data on a screen or displays data associated with communication. The display unit 50 may include a Liquid Crystal Display (LCD), an Organic Light Emitting Diode (OLED), or an Active Matrix OLED (AMOLED). When the LCD, OLED, or AMOLED is implemented with a touch screen, the display unit 50 may operate as an input unit for controlling the portable terminal, together with the key input unit 27. The display unit 50 may serve as an input unit for controlling the portable terminal, together with the key input unit 27, by including a touch screen. The display unit 50 may display a manual of an application.

The controller 10 controls the overall operation of the portable terminal. The controller 10 provides a use method of the portable terminal, that is, a manual of the portable terminal to the user upon receiving a request for viewing the manual of the portable terminal from the user. The controller 10 may provide the manual in the form of a moving image at the request from the user. The moving image may be in the form of a predetermined codec, or in the form of a flash animation, for example, having a file extension of .swf, which uses a flash function of Adobe.

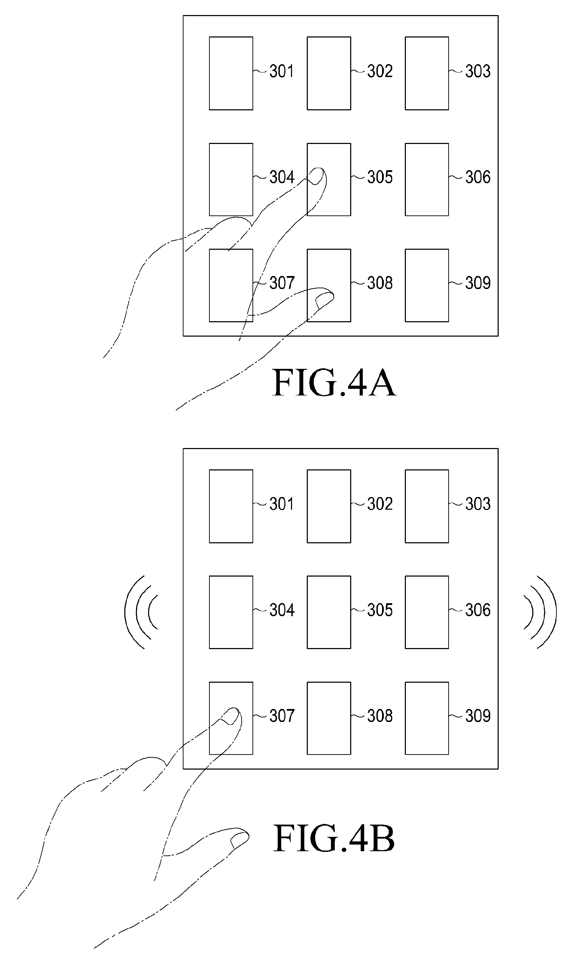

FIG. 2 is a flowchart illustrating a process of providing a manual of a portable terminal according to an exemplary embodiment of the present invention. FIGs. 3A and 3B are exemplary diagrams for describing a process of providing a manual of a portable terminal according to an exemplary embodiment of the present invention. FIGs. 4A and 4B are exemplary diagrams for describing a process of providing a manual of a portable terminal according to an exemplary embodiment of the present invention.

Referring to FIG. 2, a user may request a manual of a portable terminal in step S201.

Referring to FIGs. 3A through 4B, the user may request overlay of a manual viewing menu 302a shown in FIG. 3B through predetermined menu manipulation. The user may request a manual of an application corresponding to an icon 302 by selecting the manual viewing menu 302a.

The user may request a manual of an application corresponding to an icon 305 by touching the icon 305 for a predetermined time or more (for example, one second or more) as shown in FIG. 4A. The user may, for example, touch an icon 307, and then move the portable terminal in a predetermined pattern, for example, shake the portable terminal, thereby requesting a manual of an application corresponding to the icon 307. The user may request a manual of an application corresponding to an icon by manipulating a menu, touching the icon for at least a predetermined time, or by selecting the icon and moving the portable terminal in a predetermined pattern.

In step S202, the controller 10 provides the requested manual of the application. The manual may be provided in the form of a help item provided in a conventional portable terminal, but according to an exemplary embodiment of the present invention, the manual may be provided in the form of a moving image to allow the user to more easily understand the manual. A codec for providing the manual in the form of a moving image is assumed to be provided in a form processible by the controller 10, and a type of the codec may be updated later by firmware upgrade. If a manual is not required in step S201, a corresponding function is performed.

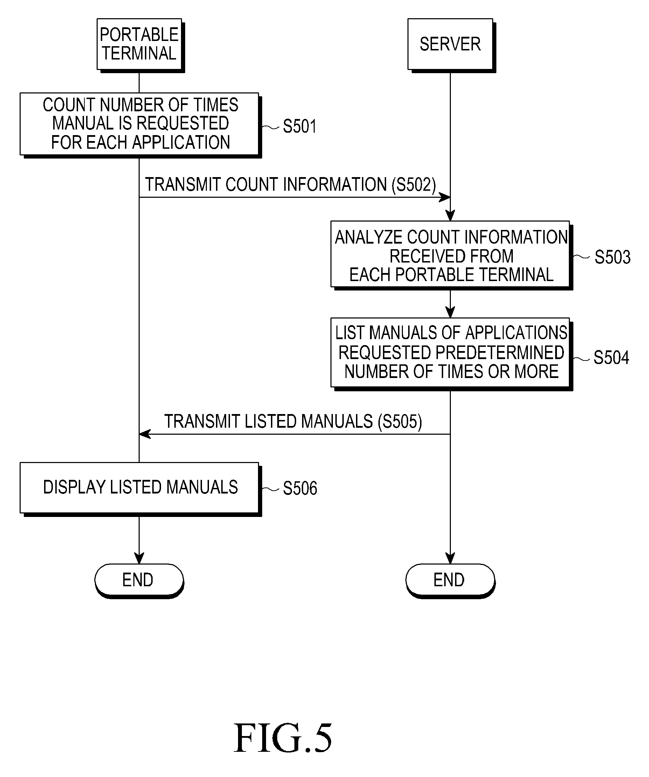

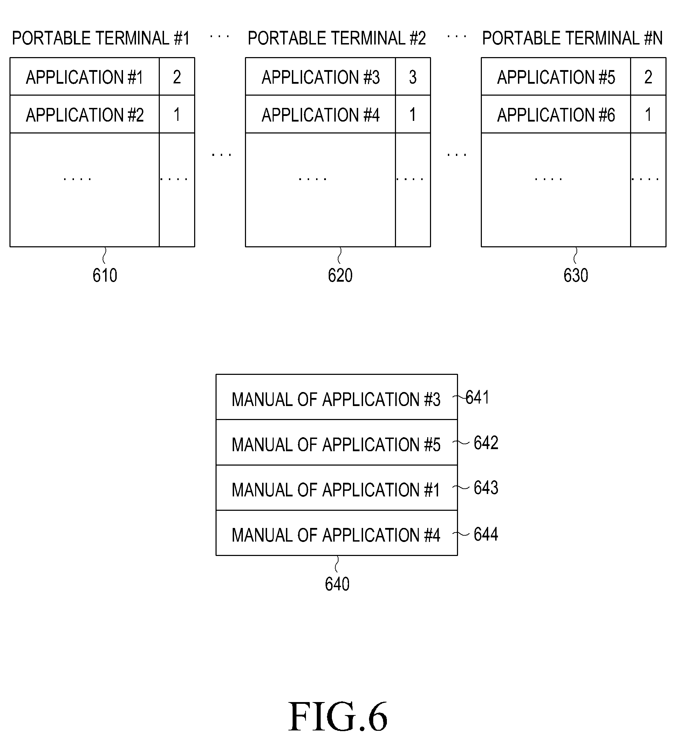

FIG. 5 is a flowchart illustrating a process of providing a manual of a portable terminal according to an exemplary embodiment of the present invention. FIG. 6 is an exemplary diagram for describing a process of providing a manual of a portable terminal according to an exemplary embodiment of the present invention.

Referring to FIG. 5, in steps S501 and S502, the controller 10 of the portable terminal counts the number of times a manual is requested for each application and transmits information about the request number to a server.

Referring to FIG. 6, a controller of a portable terminal #1 records the number of times the user requests a manual for each application, such as "2" for an application #1 indicating that the user requests a manual of the application #1 twice and "1" for an application #2 indicating that the user requests a manual of the application #2 once as shown in a screen 610. Likewise, a controller of a portable terminal #2 and a controller of a portable terminal #N record the number of times the user requests a manual for each application as shown in screens 620 and 630, respectively.

The portable terminals #1 through #N transmit the number of times the user requests a manual for each application to the server in the form of count information at the request of the server, at the request of the user, or at predetermined time intervals. The server may be a server of a service provider which provides applications executable in the portable terminal, a server of a portable terminal manufacturer, or a general computer.

In steps S503 through S505, the server analyzes the count information received from each portable terminal (i.e., each of the portable terminals #1 through #N) to list manuals of applications requested by the user more than a predetermined number of times and transmits the listed manuals to the portable terminals.

Referring to FIG. 6, in steps S503 through S505, the server separately lists manuals of applications requested by the user more than a predetermined number of times by summing the numbers of times the user requests a manual for each application based on the count information received from each portable terminal. The server transmits these listed manuals to every terminal that is communicating with the server in step S505. The terminal, upon receiving such information stores this information in its memory 30 and may show this to the user by means of a screen 640 displayed on display 50, step S506.

For example, if the number of times the user requests a manual for each of an application #3, an application #5, an application #1, and an application #4 is more than 100, the server separately lists manuals of those applications (for example, manuals in a moving image form) as shown in the screen 640 on display 50.

Based on the analysis result of the count information received from each portable terminal, manuals of a predetermined number (for example, 4) of upper applications sorted in a descending order of the number of times the user requests a manual may be separately listed by the server and provided to each portable terminal. In this way, such as in a case of a Frequently Asked Question (FAQ), in an exemplary embodiment of the present invention, the server may provide manuals of applications (for example, upper four manuals) requested most frequently (or the most number of times) by users (users of the portable terminals #1 through #N) to the users.

In step S506, the controller 10 displays the listed manuals of the applications received from the server. The controller 10 may display the listed application manuals received from the server at predetermined time intervals or at the request of the user according to an exemplary embodiment of the present invention. For example, if upper four manuals 641 through 644 which are frequently requested by the users of the portable terminals are displayed as shown in the screen 640 of FIG. 6, the user may select one of the manuals 641 and 644 and request display of the selected one.

While in the exemplary embodiment described with reference to FIGs. 2 through 5, a process of requesting and providing a manual of an application which is provided by a portable terminal or may be downloaded later has been described, an exemplary embodiment of the present invention may also provide a basic manual of the portable terminal, e.g., a manual associated with schedule management, e-mail, a camera, or Internet, in the form of a text/still image or a moving image similarly with the description made in connection with FIGs. 2 through 5. For example, a basic use method of a User Interface (UI), an unlock method of the portable terminal, a use of each key provided in the portable terminal, a method for sending a call, a use method of a widget, a method for resetting the portable terminal, and so forth may be provided. In addition, a method of using WiFi associated with communication setup of the portable terminal, e.g., searching for an access point, connecting to the access point, and disconnecting from the access point, a using method of Bluetooth, e.g., searching, connecting, and disconnecting, and a method of using the portable terminal as a removable disk may be provided.

A manual of an application or a list of frequently requested manuals of applications may be provided to the user in the form of a separate application, and a manual of each application may be provided in the form of a text/still image or a moving image. Exemplary embodiments of the present invention allow the user to conveniently and easily use various applications utilizing functions provided in the portable terminal.

While the invention has been shown and described with reference to certain exemplary embodiments thereof, it will be understood by those skilled in the art that various changes in form and details may be made therein without departing from the scope of the invention as defined by the appended claims and their equivalents.

## Claims

1. A method for providing a manual of a portable terminal, the method comprising:
counting, by each portable terminal, the number of times a manual is requested for each application, storing the count number as count information, and transmitting the stored count information to a server;
analyzing, by the server, the count information received from each portable terminal, and listing a manual of an application which is requested at least a predetermined number of times; and
transmitting, by the server, the listed manual to each portable terminal.

2. The method of claim 1, wherein the manual is in the form of a moving image.

3. The method of claim 1 or 2, further comprising displaying, by the portable terminal having received the listed manual, the listed manual.

4. The method of any one of the preceding claims, further comprising displaying, by the portable terminal having received the listed manual, the listed manual at predetermined time intervals.

5. The method of any one of the preceding claims, further comprising preferentially displaying, by the portable terminal having received the listed manual, the listed manual once a manual of the portable terminal is requested from a user.

6. System for distributing at least one manual to at least one portable terminal, the system comprising at least one terminal and at least one server arranged to perform the steps of a method according to any of the claims 1-5.

7. A method of providing a manual, the method comprising:
receiving, from a plurality of portable terminals, a number of times each of a plurality of manuals was requested by users;
for each of the plurality of manuals, determining whether the manual was requested at least a predetermined number of times; and
transmitting, to each of the portable terminals, manuals corresponding to manuals requested at least the predetermined number of times.

8. The method of claim 7, wherein the manual is a moving picture.

9. The method of claim 7 or 8, further comprising transmitting a request for the number of times each of the plurality of manuals was requested by users.

10. The method of claim 7 or 8, wherein the number of times each of the plurality of manuals was requested by users is received at predetermined time intervals.

11. A server arranged to perform a method according to any of the claims 7-10.

12. A method for providing a manual of a portable terminal, the method comprising:
requesting a manual of the portable terminal; and
outputting the manual in the form of a moving image at the request for the manual.

13. The method of claim 12, wherein the requesting of the manual comprises selecting a predetermined application executed in the portable terminal and requesting a manual of the selected application.

14. The method of claim 12 or 13, wherein the requesting of the manual comprises selecting an icon corresponding to a predetermined application executed in the portable terminal for at least a predetermined time.

15. The method of claim 14, wherein the selecting of the icon for at least the predetermined time comprises generating a touch input on the icon corresponding to the application for at least the predetermined time.

16. The method of claim 12, wherein the requesting of the manual comprises at least one of:
selecting an icon corresponding to a predetermined application executed in the portable terminal; and
moving the portable terminal in a predetermined pattern.

17. Portable terminal arranged to perform a method according to any of the claims 12-16.
